# EUROPÄISCHE PATENTSCHRIFT

(11) **EP 0 807 609 B1**
(45) Veröffentlichungstag und Bekanntmachung des Hinweises auf die Patenterteilung: **26.01.2000**
(21) Anmeldenummer: 97107766.4
(22) Anmeldetag: 13.05.1997
(51) Int. Cl.: C03B 33/03, C03B 33/07

(54) **Vorrichtung zum Trennen von Glastafeln**
Apparatus for severing glass sheets
Dispositif pour couper des feuilles de verre

(30) Priorität: 14.05.1996 DE 29608724 U
(43) Veröffentlichungstag der Anmeldung: 19.11.1997
(73) Patentinhaber: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Reichel, Wolfgang, Dipl.-Ing.

(56) Entgegenhaltungen:
- EP-A- 0 550 408
- CH-A- 686 572
- DE-C- 919 659
- US-A- 1 642 839
- US-A- 2 365 503
- US-A- 3 181 757
- PATENT ABSTRACTS OF JAPAN vol. 18, no. 118 (C-1172), 25.Februar 1994 & JP 05 310437 A (ASAHI GLASS CO. LTD.), 22.November 1993,
- PATENT ABSTRACTS OF JAPAN vol. 17, no. 355 (C-1079), 6.Juli 1993 & JP 05 051230 A (BANDO KIKO CO. LTD.), 2.März 1993,
- PATENT ABSTRACTS OF JAPAN vol. 17, no. 355 (C-1079), 6.Juli 1993 & JP 05 051229 A (BANDO KIKO CO. LTD.), 2.März 1993,

## Beschreibung

Die Erfindung betrifft eine Vorrichtung zum Trennen von Glastafeln gemäß dem Oberbegriff des Anspruchs 1. Insbesondere ist die Erfindung auf eine Vorrichtung in Form einer automatischen Verbundglastafel-Schneidanlage gerichtet, in der durch Schneiden, Brechen und thermisches Trennen Verbundglastafelabschnitte, sogenannte VSG-Traveren abgetrennt werden, die dann in weitere Unterabschnitte aufgeteilt werden.

Es sind zahlreiche solcher automatischen Schneidanlagen zum Bewegen, Schneiden und Brechen von Flachglas im Handel erhältlich, die sich durch eine Glastafelauflagefläche in Form eines Tisches auszeichnen, dessen Arbeitsfläche in der Regel mit einem Luftkissensystem zur einfacheren Handhabung der Glastafeln für den Positionier- und Brechvorgang ausgerüstet ist. Die Positionierung findet gegen Positionierungsanschläge statt, die sich im allgemeinen insbesondere an der Längsseite der Auflagefläche befinden. Quer zur Längsachse erstreckt sich die eigentliche Trennwerkzeugeinrichtung, zumeist in Form einer in Richtung der Längsseite verfahrbaren Schneidbrücke.

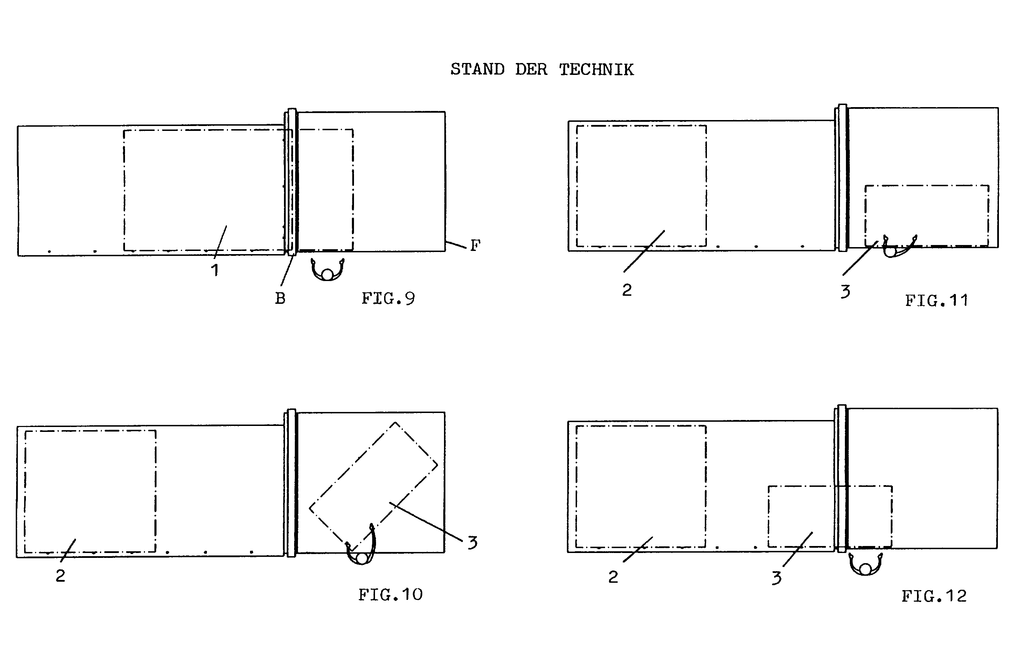

In den Figuren 9 bis 12 sind schematisch die übliche Vorgehensweise des Zerteilens einer ersten Glastafel 1 in ein Restblatt 2 und eine weiter zu zerteilende VSG-Travere 3 sowie die weitere Abarbeitung der abgetrennten VSG-Travere 3 gezeigt. Nach dem ersten automatischen Arbeitsgang auf einer prinzipiell skizzierten, eine Schneidbrücke B und Auflagefläche F umfassenden Verbundglasschneidvorrichtung mit den üblichen Funktionsmerkmalen Schneiden, Brechen und Trennen erfolgt eine manuelle Drehung der abgetrennten Travere 3 durch eine angedeutete Bedienungsperson. In FIG.11 ist die manuelle Ausrichtung der Travere durch den Bediener in y-Achsenrichtung gezeigt und in FIG. 12 die dem Trennvorgang vorausgehende, wiederum manuelle Ausrichtung in der x-Achse, um die Travere so unter die Schneidvorrichtung zu schieben und zu positionieren, daß der darauffolgende Einzelschritt der weiteren Bearbeitung möglich ist.

Für das manuelle Drehen und Positionieren der Glastafeln bzw. der abgetrennten Traveren ist insbesondere bei größeren Elementen erfahrungsgemäß ein hoher Kraftaufwand erforderlich. Der Bediener muß die Travere von oben anfassen, wodurch es zu einer Beeinträchtigung und gegebenenfalls Beschädigung der üblicherweise vorhandenen Funktionsschichten, der Low-E Schichten, kommen kann. Häufig wird bei dieser Manipulation die beschichtete Scheibenseite zerkratzt.

Die Exaktheit und Schnelligkeit der Positionierung hängen darüber hinaus von der jeweiligen Geschicklichkeit und Routine des Bedieners ab und bestimmen so Effektivität und Taktzeit der aufeinanderfolgenden Trennvorgänge.

Es ist auch bereits aus der CH-PS 686 572 eine Vorrichtung mit den Merkmalen nach dem Oberbegriff des Anspruchs 1 bekannt zum Trennen von Glastafeln, insbesondere von Verbundglastafeln und abgetrennten Traveren mit einer Auflagefläche für die zu trennende Glastafel mit Positionierungsanschlägen an einer Seite und mit einer über die Auflagefläche quer zu dieser verlaufenden Trennwerkzeugeinrichtung, mit einer drehbaren an die Glastafel angreifenden Halterungseinrichtung zum Drehen der Glastafel oder der abgetrennten Travere in den Bereich der Trennwerkzeugeinrichtung und mit einer Verschiebeeinrichtung zum Herausbewegen eines abgetrennten Glastafelrestes aus diesem Bereich. Bei dieser Vorrichtung greift eine als Halterungseinrichtung ausgebildete Saugvorrichtung von oben an die Glasscheibe an und ist mittig zum Schwerpunkt der kleineren abgetrennten Rohscheiben, sogenannter Primitivs, ausgerichtet. Zwar ist das Ergreifen der abgetrennten Primitivs mittig von oben technisch sinnvoll und läßt in einfacher Weise durch Drehen der Halterungseinrichtung ein Abbrechen der Ränder, ein Übersetzen in eine Schleifmaschine und ein Abschleifen der Ränder zu. Ein einfaches Justieren und Trennen von Glastafeln ist jedoch mit dieser bekannten Vorrichtung nicht möglich, vielmehr werden, nachdem die Glastafel auf einem Förderband korrekt positioniert ist, mit einer Schneidvorrichtung nacheinander geneigt und querliegende Schnitte ausgeführt, wobei die Schneidvorrichtung entsprechend gesteuert werden muß.

Damit werden hohe Anforderungen an die Führung der Schneidvorrichtung gestellt.

Es ist andererseits nach der US-PS 16 42 839 eine Glasschneidemaschine bekannt, bei der eine Glasplatte mit Hilfe eines drehbaren Kopfes als Halterungseinrichtung, der von oben an die Glasplatte angreift, gefördert und gedreht werden kann, so daß sie in die erforderlichen Arbeitsstellungen gebracht werden kann. Jedoch ist auch bei dieser Glasschneidemaschine eine Nachverschiebung erforderlich, wenn bestimmte Arbeitsschritte oder Bearbeitungen vorgenommen werden sollen.

Der Erfindung liegt die Aufgabe zugrunde, eine Vorrichtung zum Trennen von Glastafeln und abgetrennten Traveren zu schaffen, mit deren Hilfe eine Positionierung der Glastafeln und abgetrennten Traveren in einfachster Weise ohne Nachjustierung erfolgt.

Diese Aufgabe wird durch die kennzeichnenden Merkmale zusammen mit den Merkmalen des Oberbegriffes des Anspruchs 1 gelöst. Danach sind eine drehbare, von unten an die jeweilige Glastafel bzw. Travere angreifende Halterungseinrichtung zur Drehung der Glastafel oder der Travere in den Bereich der Trennwerkzeugeinrichtung vorgesehen und die Halterungseinrichtung ist ferner so ausgebildet, daß ihre Drehachse auf der Symmetrielinie der Trennwerkzeugeinrichtung und der Positionierungsanschläge liegt.

Durch diese Auslegung der Vorrichtung sind durch die drehbare Halterungseinrichtung ein automatisches Drehen und Positionieren der Glastafeln möglich, nachdem mit der Verschiebeeinrichtung automatisch für den Abtransport eines gegebenenfalls bereits abgetrennten Glastafelrestes aus dem Bereich der Trennwerkzeugeinrichtung (im allgemeinen der Schneidbrücke mit Schneidwerkzeug) und damit aus dem Bereich der folgenden Drehbewegung der weiter zu bearbeitenden Travere gesorgt worden ist.

Die Funktionsschichten werden durch die von unten an die Glastafel bzw. Travere angreifende Halterungseinrichtung nicht beeinträchtigt.

Durch die Lage der Drehachse der Halterungseinrichtung auf der Symmetrielinie zwischen der Trennwerkzeugeinrichtung und der Positionierungsanschläge wird gleichzeitig mit der automatisch erfolgenden Drehung einer Travere auch automatisch deren exakte Ausrichtung in der y-Achse erzielt.

Die Halterungseinrichtung umfaßt vorzugsweise einen oder (insbesondere bei größeren Glastafeln) mehrere in der Glastafelauflagefläche angeordnete bzw. integrierte Saugteller, von denen wahlweise einer in der Drehachse der Halterungseinrichtung liegt und die anderen auf einer Drehbahn mit der Glastafel geführt werden. Prinzipiell können die Saugteller oder etwaige andersartige von unten an die Glastafel angreifenden Halterungsmittel beliebig angeordnet werden. Es sollte nach der bevorzugten Ausführung jedoch stets dafür gesorgt sein, daß der Drehpunkt, um den die Saugteller und die Scheibe sich drehen, auf der genannten Symmetrielinie liegt.

Falls die Gesamtvorrichtung bereits mit Saugköpfen zur Scheibenabnahme versehen ist, können die hierfür vorhandenen Saugeinrichtungen ausgenutzt werden. Ansonsten ist der zusätzliche Aufwand gering, zumal die üblichen Vorrichtungen bereits über ein Druckleitungssystem für das Luftkissen verfügen.

Soll z.B. auf Saug- oder Druckleitungen verzichtet werden, so können die gemäß Anspruch 4 bevorzugt verwendeten Saugteller auch durch "passive" Halterungseinrichtungen z.B. aus Gummi oder mit anderen geeigneten Materialen überzogene Auflageteile ersetzt werden. Für eine zusätzliche Abstützung der Glastafel sorgen vorzugsweise in der Auflagefläche vorgesehene Hubrollen und das gegebenenfalls vorgesehene Luftkissen.

Die Verschiebeeinrichtung umfaßt vorzugsweise Transportriemen, auf denen die Glastafel bzw. der Glastafelrest aufliegen. Ferner ermöglicht sie vorzugsweise auch eine Bewegung der in den Bereich der Trennwerkzeugeinrichtung hineingedrehten Glastafel parallel zu den Positionierungsanschlägen, so daß auch die Ausrichtung in x-Achsenrichtung automatisierbar ist.

Im folgenden wird die Erfindung anhand der Zeichnungen näher erläutert. Es zeigen
FIG.1 ein Ausführungsbeispiel der erfindungsgemäßen Vorrichtung in einem ersten Arbeitsgang;
FIG.2 die Vorrichtung der FIG.1 in einem zweiten Arbeitsgang des Wegfahrens eines Restblattes über Transportriemen;
FIG.3 die Vorrichtung der FIG.1 in einem folgenden Arbeitsgang einer automatischen Drehung;
FIG.4 die Vorrichtung der FIG.1 am Ende des Drehvorgangs gemäß FIG.3;
FIG.5A die Vorrichtung der FIG.1 bei der Positionierung in x-Achse mittels der Transportriemen und FIG.5B die Vorrichtung in einer Schnittansicht A, die die konstruktive Auslegung der Vorrichtung der FIG.1 verdeutlicht;
FIG.6A und 6B eine detailliertere Ansicht eines Teils der FIG.5B;
FIG.7A und 7B mögliche Ausführungsformen einer erfindungsgemäßen Halterungseinrichtung;
FIG.8 eine Aufsicht auf die Vorrichtung in einem Ausschnitt zur Verdeutlichung der Anordnung des Drehpunktes auf der Symmetrielinie von Positionierungsanschlägen und Schneidwerkzeug;
FIG.9 eine Vorrichtung aus dem Stand der Technik bei einem ersten automatischen Arbeitsgang ;
FIG.10 die manuelle Drehung einer abgetrennten Travere durch einen Bediener an der Vorrichtung aus dem Stand der Technik;
FIG.11 die Ausrichtung durch den Bediener in y-Achse an der Vorrichtung aus dem Stand der Technik;
FIG.12 die Ausrichtung durch den Bediener in x-Achse an der Vorrichtung aus dem Stand der Technik; und
FIG.13 und 14 ein weiteres Ausführungsbeispiel der erfindungsgemäßen Vorrichtung mit zusätzlicher Kühlvorrichtung.

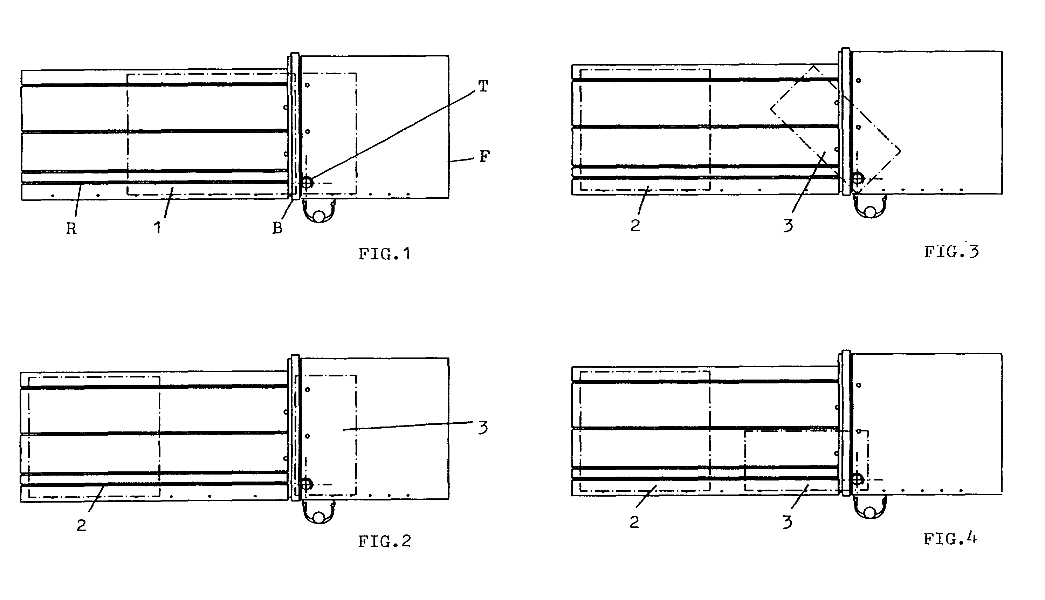

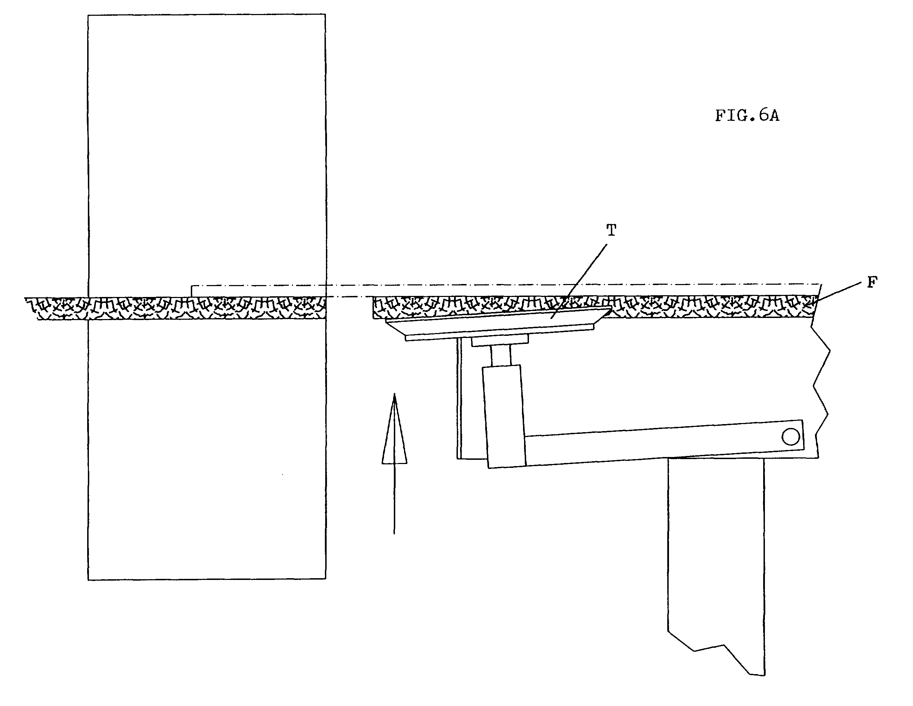

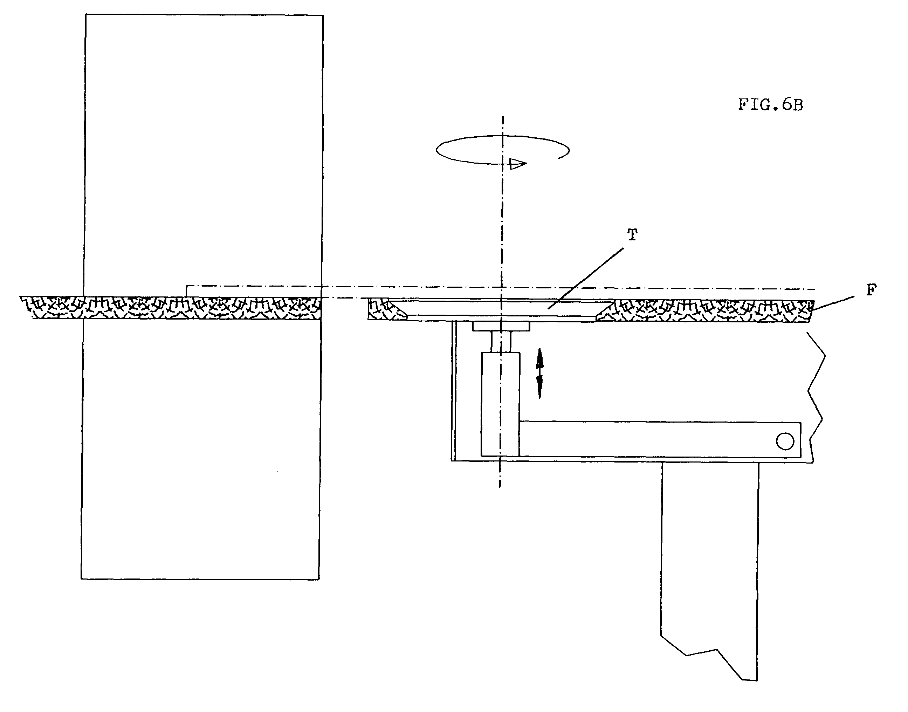

Die in den Figuren 1 bis 6 dargestellte erfindungsgemäße Vorrichtung zum Trennen einer Glastafel umfaßt wie die Vorrichtung aus dem Stand der Technik eine lediglich angedeutete Auflagefläche für die Glastafeln u.a. mit nicht dargestellten Mitteln zur Erzeugung eines Luftkissens auf der Auflagefläche, mit festen bzw. ausfahrbaren Positionierungsanschlägen an der dem Bediener zugewandten Längsseite der Auflagefläche F und einer ebenfalls nur angedeuteten Schneidbrücke B, die sich senkrecht zur genannten Längsseite erstreckt. Die Auflagefläche ist Teil des Tisches der automatischen Schneidanlage, deren übrige bekannte konstruktive und funktionelle Merkmale nicht dargestellt sind.
Die erfindungsgemäße Vorrichtung umfaßt eine in der Auflagefläche, d.h. dem Arbeitstisch angeordnete Halterungseinrichtung für die Glastafeln bzw. Traveren 3 in Form eines runden oder ovalen Saugtellers T, der gemäß FIG.5B und 6A, 6B von unten in den Arbeitstisch und dessen Auflagefläche F integriert ist, in der ein entsprechender Raum für den Teller T ausgespart ist. Der Saugteller T ist an eine Saugleitung angeschlossen und gelenkig gehaltert, so daß er aus der in FIG.6A gezeigten abgesenkten Lage in die in FIG.6B gezeigte angehobene Betriebsstellung gebracht werden kann.

Der Saugteller T haltert, hebt und stützt die abgetrennte Travere so ab, daß sie auf dem Tisch bewegbar ist und mit der Drehung des Saugtellers automatisch ohne manuelle Einwirkung drehbar ist.

Die Relativbewegung des Saugtellers erfolgt auf der der Auflagefläche F zugewandten Seite des Glases und damit der unbeschichteten Seite, so daß die im allgemeinen vorhandenen Funktionsschichten nicht berührt werden.

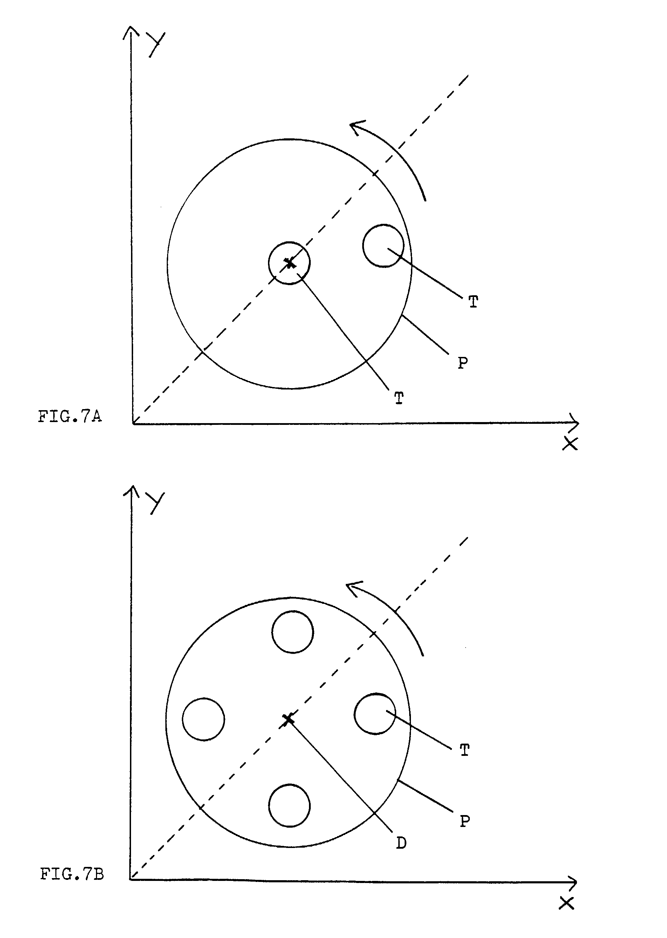

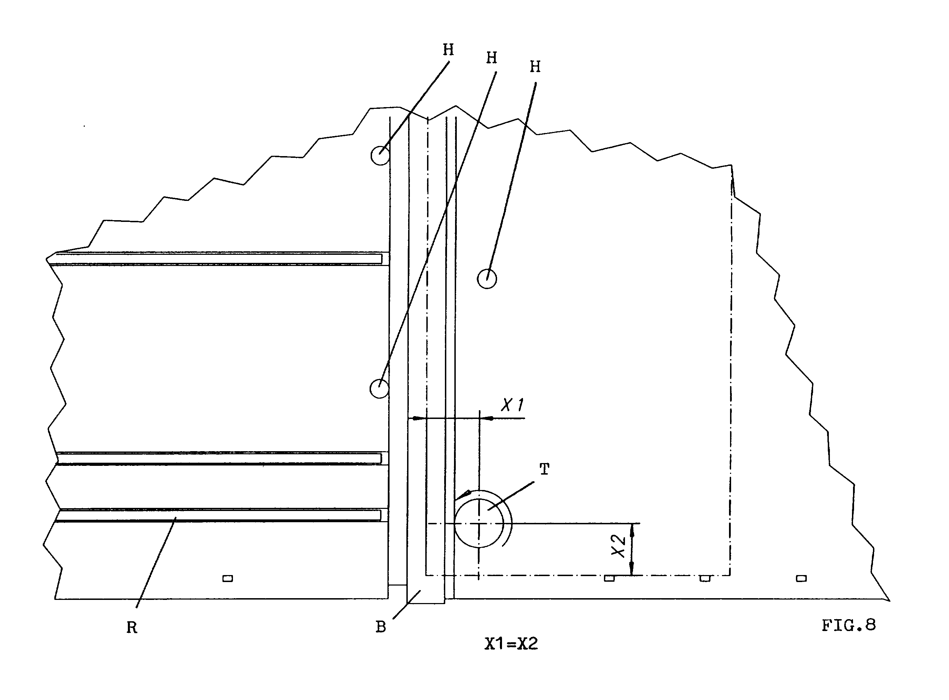

Bei größeren Traveren werden zwei oder mehr Saugteller T eingesetzt, wobei in diesem Fall die Halterungseinrichtung z.B. eine Platte P umfaßt, die mit zwei (FIG.7A) oder mehr (FIG.7B) Saugtellern T bestückt ist. Von erheblichem Vorteil für diese und alle anderen denkbaren Ausführungen ist, daß der Drehpunkt D eines einzigen Saugtellers T wie in den Figuren 1 bis 6 oder einer Halterungsstruktur wie der Platte für die Saugteller (FIG.7) in der bevorzugten Ausführung exakt auf der Symmetrielinie von Schneidwerkzeug (y-Achsenrichtung) und Positionierungsanschlägen (x-Achsenrichtung) liegt. Die Symmetrielinie ist in den FIG.7A und B gestrichelt angezeigt. Die FIG.8 zeigt darüber hinaus auf andere Weise, wie durch die Lage des Drehpunktes auf der Symmetrielinie zwischen den in FIG.8 angedeuteten Positionierungsanschägen und dem Schneidwerkzeug gleiche Abstände x1 und x2 vom Drehzentrum zum Schneidwerkzeug und diesen Anschlägen vorliegen. Unter Aufrechterhaltung der Abstandsverhältnisse wird bei der Drehung von Saugteller und Travere um 90° die Travere automatisch auch in y-Achsenreichtung ausgerichtet. In FIG.8 sind auch in der Auflagefläche F vorgesehene Hubrollen H zur Abstützung der Glastafel bzw. Travere gezeigt, so daß die Last der Tafel bzw. Travere auf die Hubrollen und den oder die Saugteller verteilt ist.

Gemäß FIG.7A ist ein Saugteller T im Drehpunkt D vorgesehen und ein weiterer versetzt hierzu, wobei letzterer mit der Drehung der Travere mitgeführt wird. Es kann entweder die gesamte Fläche der Platte P aus der Auflagefläche F ausgespart sein, oder jeweils nur der Bereich des um seine Achse und die Drehachse gedrehten, zentralen Drehtellers und die Bewegungsbahn des versetzten Drehtellers (FIG.7A) oder der vier zum Drehpunkt D versetzten Drehteller nach FIG.7B, in der im Drehpunkt D kein Saugteller vorgesehen ist. Durch diese Anordnungen mit mehreren runden oder ovalen Saugtellern ist auch die Drehung von großen Traveren nur unterstützt durch ein Luftkissen möglich.

Ferner umfaßt die Vorrichtung Transportriemen R zum Wegführen eines Restblattes 2 und zur automatischen Ausrichtung der Travere 3 in x-Achsenrichtung.

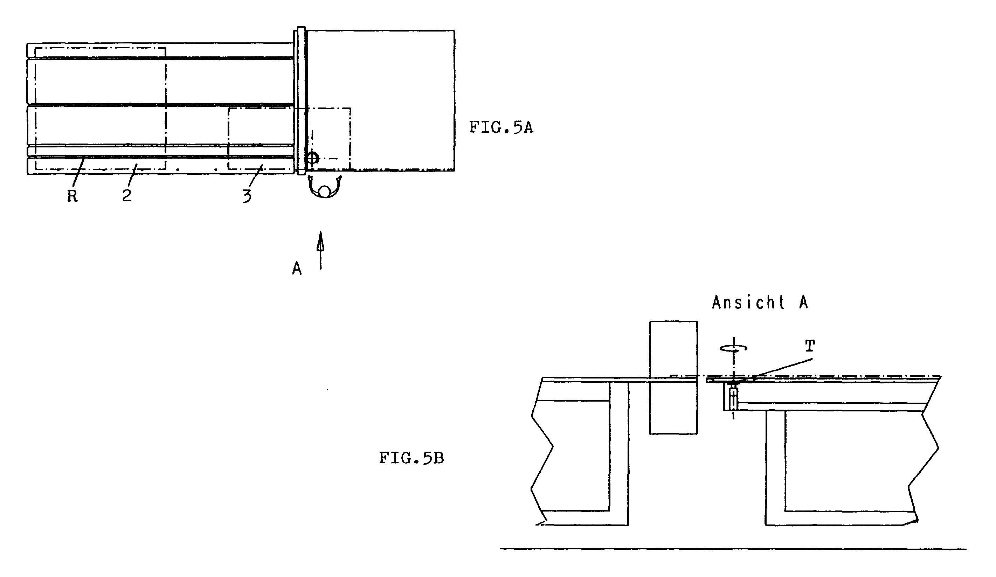

Nach dem üblichen ersten Arbeitsgang der Verbundglastrennvorrichtung gemäß FIG.1 mit den Funktionsmerkmalen Schneiden-Brechen-Trennen wird das Restblatt 2 über den Transportriemen R aus dem Bereich der Schneidbrücke B herausgefahren (FIG.2), in den die abgetrennte Travere 3 gemäß FIG.3 nach Ansaugen durch den Saugteller von unten automatisch hineingedreht wird, um den nötigen Platz für diesen Drehvorgang bereitzustellen. FIG.4 zeigt das Ende der Drehbewegung mit der gleichzeitig erzielten Positionierung in y-Achse. FIG.5 stellt die automatische Positionierung der Travere in x-Achse mittels der Transportriemen R dar, so daß die Bedienungsperson in keinem Arbeitsschritt an die Travere greifen muß. Sie hat gegebenenfalls lediglich die entsprechenden nicht dargestellten Auslöse- und Steuerorgane für die Dreh- und Transportbewegung zu betätigen. Auch diese Betätigung kann bei völliger Automatisierung durch entsprechende Programmierung eines Rechners für die Funktionssteuerung der Gesamtvorrichtung entfallen.

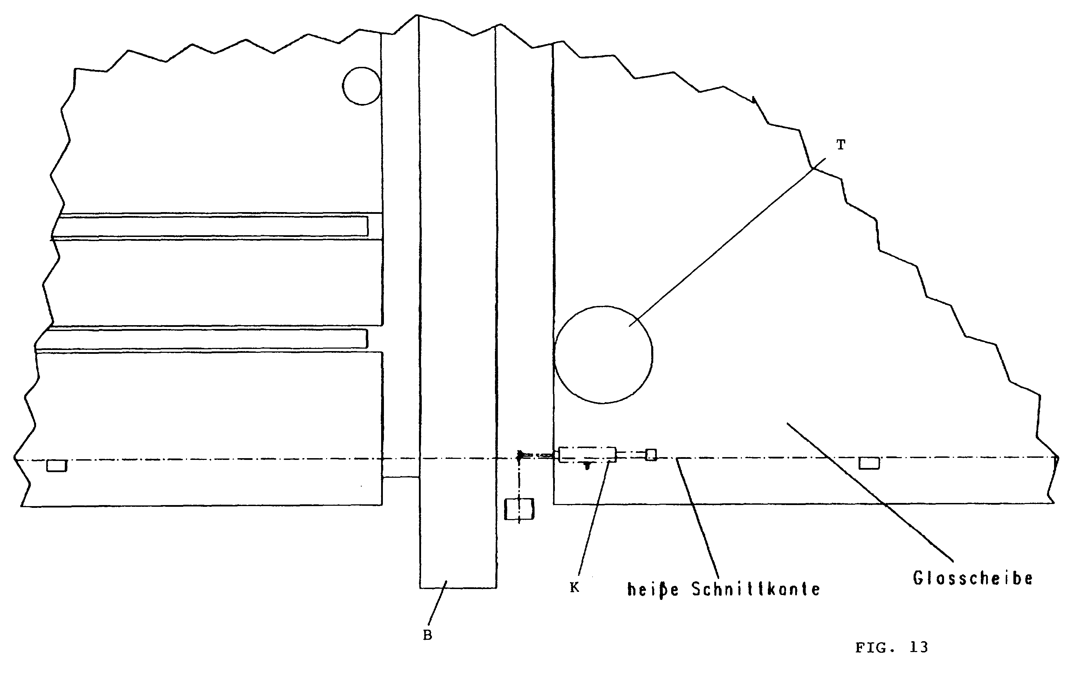

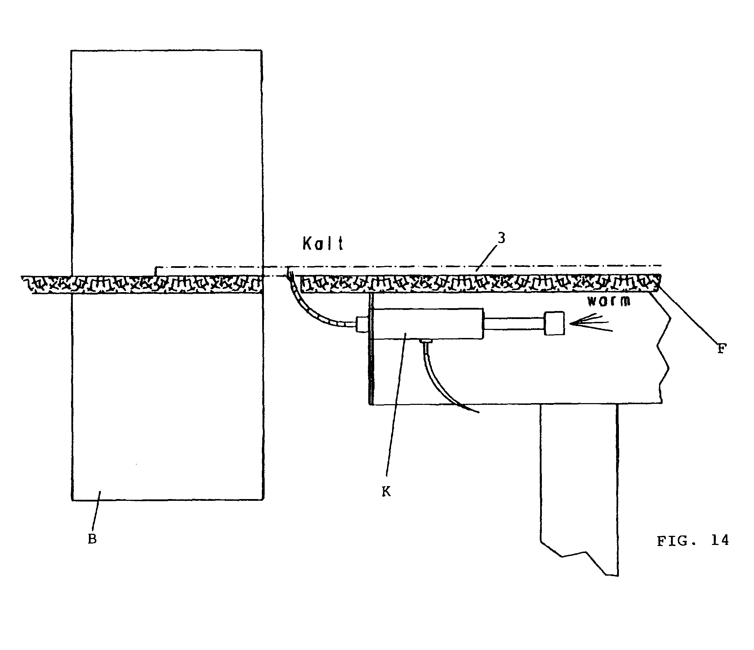

Werden Verbundglasscheiben geschnitten, so erfolgt das Trennen der Folie in diesen Verbundglasscheiben durch thermische Einwirkung. Die Restwärme aus diesem Trennvorgang verbleibt noch einige Zeit in der Schnittkante der Traverse, während diese bereits für den nächsten Arbeisgang gedreht wird. Ein sauberes Schneiden ist dann nicht möglich, wenn unmittelbar nach dem Drehen geschnitten werden soll, um die erfindungsgemäß mögliche hohe Taktzeit auszunutzen. Der Bereich für den Schnittansatz des nächsten Schnittes an der Traverse wird nach der vorteilhaften Weiterbildung der Figuren 13 und 14 gekühlt. Dazu ist eine Kühlvorrichtung K gemäß diesen Figuren vorgesehen, die kühle oder kalte Luft gegen den Bereich der Traverse fördert, in dem dieser Schnittansatz liegt, nämlich in dem auf die x-Achse gedrehten Bereich der Traverse nahe der Schneidbrücke B. Die Kühlvorrichtung K befindet sich unterhalb der Auflagefläche F für das Glas und richtet kalte Luft gegen den zu kühlenden Bereich.

## Patentansprüche

1. Vorrichtung zum Trennen von Glastafeln, insbesondere von Verbundglastafeln, und abgetrennten Traveren, mit einer Auflagefläche für die zu trennende Glastafel mit Positionierungsanschlägen an einer Seite und mit einer Der die Auflagefläche quer zu dieser verlaufenden Trennwerkzeugeinrichtung, mit einer drehbaren an die Glastafel angreifenden Halterungseinrichtung zum Drehen der Glastafel oder der abgetrennten Travere in den Bereich der Trennwerkzeugeinrichtung und mit einer Verschiebeeinrichtung zum Herausbewegen eines abgetrennten Glastafelrestes aus diesem Bereich,
**dadurch gekennzeichet,**
daß die Halterungseinrichtung (T) so ausgebildet ist, daß sie von unten an die Glastafel bzw. Travere angreift und daß die Drehachse der Halterungseinrichtung (T) auf der Symmetrielinie der Trennwerkzeugeinrichtung (B) und der Positionierungsanschläge liegt.

2. Vorrichtung nach Anspruch 1,
**dadurch gekennzeichnet,**
daß die Halterungseinrichtung einen oder mehrere in der Glastafelauflagefläche (F) angeordnete Saugteller (T) umfaßt, von denen wahlweise einer in der Drehachse der Halterungseinrichtung liegt und die anderen auf einer Drehbahn mit der Glastafel geführt werden.

3. Vorrichtung nach Anspruch 1 oder 2,
**dadurch gekennzeichnet,**
daß die Verschiebeeinrichtung (R) auch eine Bewegung der in den Bereich der Trennwerkzeugeinrichtung hineingedrehten Glastafel parallel zu den Positionierungsanschlägen ermöglicht.

4. Vorrichtung nach einem der vorhergehenden Ansprüche,
**dadurch gekennzeichnet,**
daß die Verschiebeeinrichtung Transportriemen (R) aufweist, auf denen die Glastafel bzw. der Glastafelrest aufliegen.

5. Vorrichtung nach einem der vorhergehenden Ansprüche,
**dadurch gekennzeichnet,**
daß eine Kühlvorrichtung (K) vorgesehen ist, die zur Zuführung von kühler oder kalter Luft oder einem anderen Kühlmedium in den Bereich der gedrehten Verbundglas-Traverse dient, in der der Schnittansatz für den nächsten Schnitt liegt.

## Claims

1. Apparatus for severing glass sheets, in particular laminated glass sheets and severed glass sheet pieces, with a supporting surface for the glass sheet to be severed provided with positioning stop members on one side and with a severing tool device over the supporting surface and extending transversely relative to the latter, with a rotatable holding device engaging on the glass sheet for rotating the glass sheet or the severed glass sheet piece into the region of the separating tool device, and with a displacement device for moving a severed residual glass sheet out of this region,
**characterised in that**
the holding device (T) is configured such that it engages from below on the glass sheet or glass sheet piece, and in that the axis of rotation of the holding device (T) is situated on the line of symmetry of the severing tool device (B) and of the positioning stop members.

2. Apparatus according to claim 1,
**characterised in that**
the holding device comprises one or more suction plates (T) arranged in the glass sheet supporting surface (F), one of which suction plates according to choice is situated on the axis of rotation of the holding device and the others being guided on a rotational course with the glass sheet.

3. Apparatus according to claims 1 or 2,
**characterised in that**
the displacement device (R) enables also a movement of the glass sheet which is rotated into the region of the severing tool device, parallel to the positioning stop members.

4. Apparatus according to one of the preceding claims,
**characterised in that**
the displacement device has transport belts (R) on which the glass sheet or the residual glass sheet are supported.

5. Apparatus according to one of the preceding claims,
**characterised in that**
a cooling device (K) is provided which serves for supplying cool or cold air or another cooling medium into the region of the rotated servered laminated glass sheet piece in which region the cut piece is situated for the next cut.

## Revendications

1. Dispositif pour diviser des plaques de verre, notamment des plaques en verre feuilleté, et des panneaux divisés, avec une surface d'appui pour la plaque de verre à diviser avec sur un côté des butées de positionnement et avec un dispositif d'outil à diviser s'étendant au-dessus de la surface d'appui, transversalement à celle-ci, avec un dispositif de maintien tournant ayant prise sur la plaque de verre pour faire tourner la plaque de verre ou le panneau divisé, dans la zone du dispositif d'outil à diviser, et avec un dispositif de déplacement pour évacuer de cette zone un reste de plaque de verre divisé, caractérisé en ce que le dispositif de maintien (T) est réalisé de manière à avoir prise par le bas sur la plaque de verre ou sur le panneau, et de telle manière que l'axe de rotation du dispositif de maintien (T) se situe sur la ligne de symétrie du dispositif d'outil à diviser (B) et des butées de positionnement.

2. Dispositif selon la revendication 1, caractérisé en ce que le dispositif de maintien comprend un ou plusieurs plateau(x) à aspiration (T) qui sont disposés dans la surface d'appui de plaque de verre (F) et dont l'un au choix se trouve dans l'axe de rotation du dispositif de maintien et les autres sont guidés sur une trajectoire de rotation avec la plaque de verre.

3. Dispositif selon la revendication 1 ou 2, caractérisé en ce que le dispositif de déplacement (R) permet également un déplacement de la plaque de verre amenée par rotation dans la zone du dispositif d'outil à diviser, parallèlement aux butées de positionnement.

4. Dispositif selon une des revendications précédentes, caractérisé en ce que le dispositif de déplacement présente des courroies de transport (R) sur lesquelles reposent la plaque de verre ou le reste de plaque de verre.

5. Dispositif selon une des revendications précédentes, caractérisé en ce qu'il est prévu un dispositif de refroidissement (K) qui sert à amener de l'air frais ou froid ou un autre fluide de refroidissement sur le panneau en verre feuilleté tourné, dans la zone dans laquelle se trouve le bord de coupe pour la coupe suivante.
